# EUROPEAN PATENT APPLICATION

(11) **EP 4 607 379 A1**
(43) Date of publication of application: **27.08.2025**
(21) Application number: 25158543.6
(22) Date of filing: 18.02.2025
(51) Int. Cl.: G06F 21/30, G06F 21/31, G06F 21/45, H04N 1/44

(54) **ELECTRONIC DEVICE AND OPERATION CONTROL METHOD CAPABLE OF SUPPRESSING CONTINUED USE OF ADMINISTRATOR PASSWORD WHEN ADMINISTRATOR PASSWORD IS INITIAL PASSWORD**

(30) Priority: 26.02.2024 JP 2024026115
(71) Applicant: KYOCERA Document Solutions Inc., Osaka-shi, Osaka, 540-8585 (JP)
(72) Inventor: Matsuki, Yoshitaka, 540-8585 Osaka-shi (JP); Sone, Masaki, 540-8585 Osaka-shi (JP); Kato, Ryosuke, 540-8585 Osaka-shi (JP); Nomura, Kazuma, 540-8585 Osaka-shi (JP); Kowaka, Makoto, 540-8585 Osaka-shi (JP); Morishita, Yosuke, 540-8585 Osaka-shi (JP); Tokunaga, Tomoharu, 540-8585 Osaka-shi (JP); Yamada, Muneki, 540-8585 Osaka-shi (JP); Kato, Yusuke, 540-8585 Osaka-shi (JP)
(74) Representative: Plougmann Vingtoft a/s

(57) **Abstract**

An electronic device (100A) includes a determination processing portion (31), a startup processing portion (32), and a reception processing portion (33A). The determination processing portion (31) determines, when the electronic device (100A) is started, whether or not an administrator password used for authenticating an administrator of the electronic device (100A) is a predetermined initial password. The startup processing portion (32), when the determination processing portion (31) determines that the administrator password is the initial password, starts the electronic device (1 00A) in a restricted mode in which functions of the electronic device (100A) are restricted. The reception processing portion (33A) receives a change operation to change the administrator password when started in the restricted mode.

## Description

### BACKGROUND

The present disclosure relates to an electronic device and an operation control method.

In an electronic device such as a printer, an administrator password is preset to be used for authenticating an administrator of the electronic device. In addition, there is known a related art in which, when the administrator password is an initial password set by a vendor, an electronic device displays a message prompting a user to change the administrator password.

### SUMMARY

An electronic device according to one aspect of the present disclosure includes a determination processing portion, a startup processing portion, and a reception processing portion. The determination processing portion determines, when the electronic device is started, whether or not an administrator password used for authenticating an administrator of the electronic device is a predetermined initial password. The startup processing portion, when the determination processing portion determines that the administrator password is the initial password, starts the electronic device in a restricted mode in which functions of the electronic device are restricted. The reception processing portion receives a change operation to change the administrator password when started in the restricted mode.

An operation control method according to another aspect of the present disclosure is executed by an electronic device and includes a determination step, a startup step, and a reception step. The determination step determines, when the electronic device is started, whether or not an administrator password used for authenticating an administrator of the electronic device is a predetermined initial password. The startup step, when the determination step determines that the administrator password is the initial password, starts up the electronic device in a restricted mode in which functions of the electronic device are restricted. The reception processing step receives a change operation to change the administrator password when started in the restricted mode.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a diagram showing a configuration of an image forming apparatus of a first embodiment according to the present disclosure.
FIG. 2 is a block diagram showing a system configuration of an image forming apparatus of a first embodiment according to the present disclosure.
FIG. 3 is a flowchart showing an example of a first operation control process executed in an image forming apparatus of a first embodiment according to the present disclosure.
FIG. 4 is a block diagram showing a system configuration of an image forming apparatus of a second embodiment according to the present disclosure.
FIG. 5 is a flowchart showing an example of a second operation control process executed in an image forming apparatus of a second embodiment according to the present disclosure.

### DETAILED DESCRIPTION

Hereinafter, embodiments according to the present disclosure will be described with reference to the accompanying drawings. Note that the following embodiments are examples according to the present disclosure and do not limit the technical scope of the present disclosure.

### [First Embodiment]

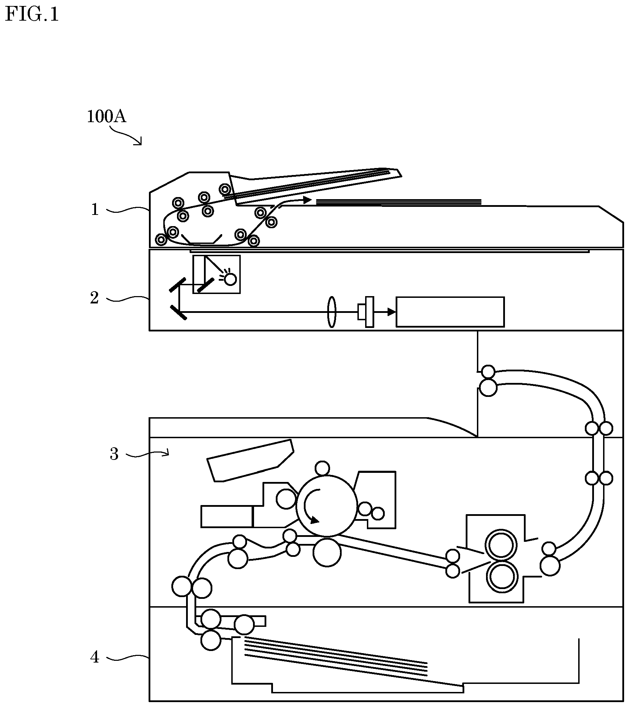

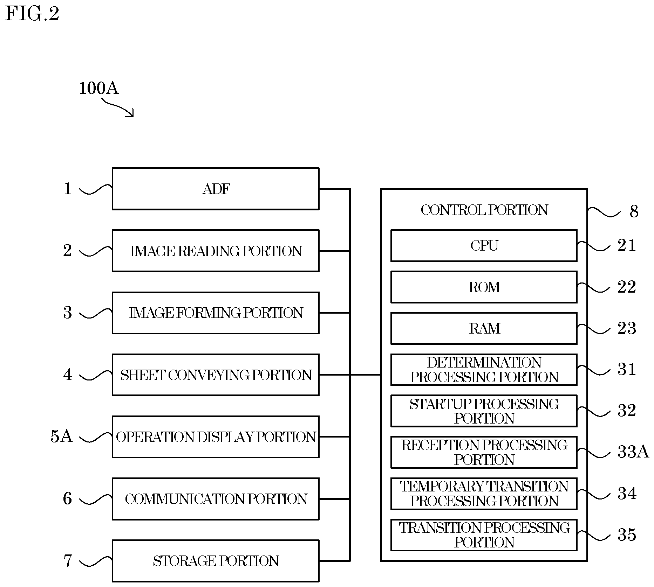

First, a configuration of an image forming apparatus 100A of a first embodiment according to the present disclosure will be described with reference to FIGS. 1 and 2. Here, FIG. 1 is a cross-sectional view showing the configuration of the image forming apparatus 100A.

The image forming apparatus 100A is a multifunction peripheral having multiple functions such as a scanning function, a printing function, a fax function, and a copying function. The image forming apparatus 100A is an example of an electronic device according to the present disclosure. Note that the electronic device according to the present disclosure may be a printer, a scanner, a fax machine, a copier, a washing machine, a refrigerator, a vending machine, an automated teller machine (ATM), or the like.

As shown in FIG. 1 and FIG. 2, the image forming apparatus 100A includes an Auto Document Feeder (ADF) 1, an image reading portion 2, an image forming portion 3, a sheet conveying portion 4, an operation display portion 5A, a communication portion 6, a storage portion 7, and a control portion 8.

The ADF 1 conveys a document to be read by the image reading portion 2. The ADF 1 includes a document setting portion, a plurality of conveying rollers, a document holder, and a sheet discharge portion.

The image reading portion 2 reads an image of a document. That is, the image reading portion 2 achieves the scanning function. The image reading portion 2 includes a document table, a light source, a plurality of mirrors, an optical lens, and a Charge Coupled Device (CCD).

The image forming portion 3 forms an image based on image data on a sheet. That is, the image forming portion 3 achieves the printing function. More specifically, the image forming portion 3 forms an image by electrophotography. The image forming portion 3 includes a photoconductor drum, a charging device, a laser scanning unit (LSU), a developing device, a transfer device, a cleaning device, and a fixing device. The image forming portion 3 may form images using a method other than the electrophotographic method, such as an inkjet method.

The sheet conveying portion 4 conveys a sheet on which an image is formed by the image forming portion 3. The sheet conveying portion 4 includes a sheet feed cassette and a plurality of conveying rollers.

The operation display portion 5A is a user interface of the image forming apparatus 100A. The operation display portion 5A includes a first display portion and a first operation portion. The first display portion displays various types of information in response to control instructions from the control portion 8. For example, the first display portion is a flat panel display such as a liquid crystal display. The first operation portion inputs various types of information to the control portion 8 in response to a user operation. For example, the first operation portion includes operation keys (hard keys) and a touch panel.

The communication portion 6 is a communication interface capable of executing wired or wireless data communication with an external communication device.

The control portion 8 performs overall control of the image forming apparatus 100A. As shown in FIG. 2, the control portion 8 includes a CPU 21, a ROM 22, and a RAM 23. The CPU 21 is a processor that executes various types of arithmetic processing. The ROM 22 is a non-volatile storage device in which information such as control programs for causing the CPU 21 to execute various types of processes is stored in advance. The RAM 23 is a volatile or non-volatile storage device used as a temporary storage memory (work area) for various types of processes executed by the CPU 21. In the control portion 8, the CPU 21 executes various types of control programs that are prestored in the ROM 22. Thus, the control portion 8 performs overall control of the image forming apparatus 100A.

The storage portion 7 is a non-volatile storage device. For example, the storage portion 7 is a non-volatile memory such as a flash memory. Note that the storage portion 7 may be a storage device such as a solid state drive (SSD) or a hard disk drive (HDD).

A character string indicating an administrator password used for authenticating the administrator of the image forming apparatus 100A is stored in advance in a predetermined first storage area in the storage portion 7. The administrator has authority that normal users do not have, such as authority to change settings related to security of the image forming apparatus 100A.

For example, the control portion 8 causes the operation display portion 5A to display an administrator authentication screen used for authenticating the administrator in response to a predetermined operation on the operation display portion 5A. The administrator authentication screen receives an operation for inputting a comparison string used for comparison with the administrator password. When the comparison string is input on the administrator authentication screen, the control portion 8 determines whether or not the input comparison string matches a string stored in the first storage area. In a case in which the control portion 8 determines that the input comparison string matches the string stored in the first storage area, the control portion 8 determines that the user using the image forming apparatus 100A is the administrator, and logs in the administrator to the image forming device 100A.

The administrator password in the image forming apparatus 100A at the time of shipment from the factory is an initial password set by the vendor. The administrator can arbitrarily change the administrator password by performing a predetermined operation.

As related art, an electronic device is known that displays a message urging the user to change the administrator password when the administrator password is the initial password.

However, in the electronic device according to the related art above, it is not possible to prevent the continued use of the electronic device in a state where the administrator password is the initial password.

On the other hand, in the image forming apparatus 100A of the first embodiment according to the present disclosure, as will be described below, it is possible to prevent continued use in a state in which the administrator password is the initial password.

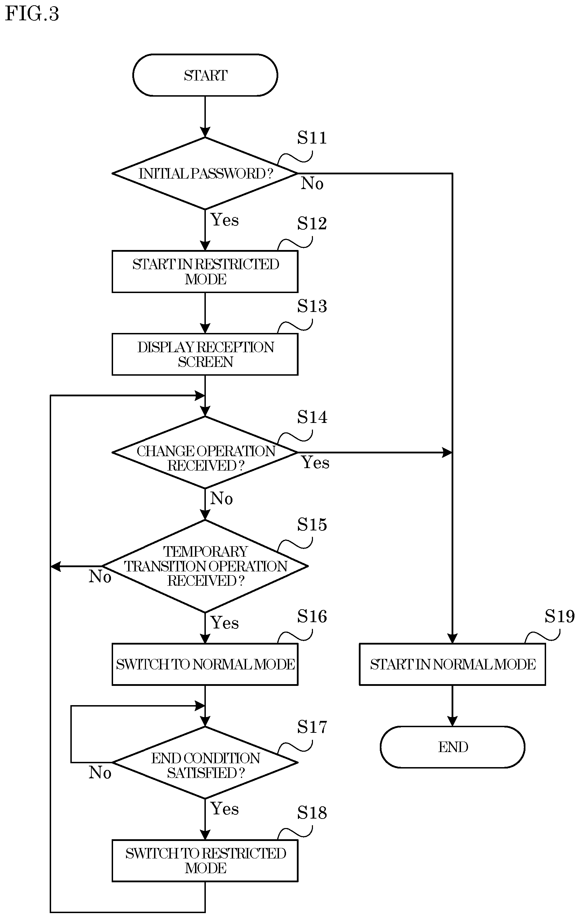

More specifically, the ROM 22 of the control portion 8 stores in advance an operation control program for causing the CPU 21 of the control portion 8 to execute a first operation control process (see the flowchart of FIG. 3) which will be described later. The operation control program may be recorded on a computer-readable recording medium such as a CD, DVD, or flash memory, and may be read from the recording medium and installed in a storage device such as the storage portion 7.

As shown in FIG. 2, the control portion 8 includes a determination processing portion 31, a startup processing portion 32, a reception processing portion 33A, a temporary transition processing portion 34, and a transition processing portion 35. Specifically, the control portion 8 uses the CPU 21 to execute the operation control program stored in the ROM 22. Thus, the control portion 8 functions as each of the processing portions described above.

Some or all of the processing portions included in the control portion 8 may be configured with electronic circuits. In addition, the operation control program may also be a program for causing a plurality of processors to function as each processing portion included in the control portion 8.

When the image forming apparatus 100A is started, the determination processing portion 31 determines whether the administrator password used for authenticating the administrator of the image forming apparatus 100A is the initial password.

For example, in the image forming apparatus 100A, a character string indicating the initial password is stored in a second storage area in the storage portion 7 that is different from the first storage area.

The determination processing portion 31 determines that the administrator password is the initial password in a case in which the character string stored in the first storage area matches the character string stored in the second storage area.

In a case in which the determination processing portion 31 determines that the administrator password is the initial password, the startup processing portion 32 starts the image forming apparatus 100A in a restricted mode in which functions of the image forming apparatus 100A are restricted.

In addition, in a case in which the determination processing portion 31 determines that the administrator password is not the initial password, the startup processing portion 32 starts the image forming apparatus 100A in a normal mode in which the functions of the image forming apparatus 100A are not restricted.

For example, in the restricted mode, functions other than those of the reception processing portion 33A, the temporary transition processing portion 34, and the transition processing portion 35 are disabled. In other words, in a case in which the operating mode of image forming apparatus 100A is the restricted mode, the user of image forming apparatus 100A cannot use any functions other than the functions of the reception processing portion 33A, the temporary transition processing portion 34, and the transition processing portion 35.

The reception processing portion 33A receives an operation to change the administrator password when the image forming apparatus 100A is started in the restricted mode.

For example, in a case in which the image forming apparatus 100A is started in the restricted mode, the reception processing portion 33A causes the operation display portion 5A to display a reception screen used for the change operation. For example, the reception screen includes an input field used to input a character string indicating the changed administrator password, and a change key used to instruct the execution of a change process that changes the administrator password to the character string input in the input field. In this case, the change operation includes an operation of inputting a character string into the input field and an operation of the change key. For example, the change key is displayed in an unselectable state until the number of characters inputted in the input field reaches a predetermined lower limit. In other words, in the image forming apparatus 100A, a password having a number of characters less than the lower limit is prohibited from being set as the administrator password.

For example, when the change key is operated on the reception screen, the control portion 8 executes the change process. In the change process, the character string stored in the first storage area is replaced with the character string inputted in the input field (the changed administrator password).

When the image forming apparatus 100A is started in the restricted mode and a predetermined temporary transition operation is received, the temporary transition processing portion 34 switches the operating mode of the image forming apparatus 100A from the restricted mode to the normal mode in which the functions of the image forming apparatus are not restricted until a predetermined end condition is satisfied.

For example, the reception screen includes a skip button used for the temporary transition operation.

When the skip button is operated on the reception screen, the temporary transition processing portion 34 switches the operating mode of the image forming apparatus 100A from the restricted mode to the normal mode. In this case, the user of the image forming apparatus 100A can use the functions of the image forming apparatus 100A without any restrictions.

For example, the end condition is that any function of the image forming apparatus 100A is used. In addition, the end condition may be that a predetermined time has elapsed since the skip button was operated.

In a case in which the end condition is satisfied after the operating mode of the image forming apparatus 100A is switched to the normal mode, the temporary transition processing portion 34 switches the operating mode of the image forming apparatus 100A from the normal mode to the restricted mode. In this case, the reception screen is displayed on the operation display portion 5A. Note that on the reception screen that is displayed after the temporary transition to the normal mode by the temporary transition processing portion 34, the skip button may be displayed in an unselectable state.

The temporary transition operation may be an operation of a predetermined operation key (hard key) included in the first operation portion of the operation display portion 5A. In this case, the reception screen does not need to include the skip button.

In a case in which the administrator password is changed from the initial password by the change operation, the transition processing portion 35 switches the operating mode of the image forming apparatus 100A from the restricted mode to the normal mode in which functions of the image forming apparatus 100A are not restricted.

### [First Operation Control Process]

Hereinafter, an example of a procedure of the first operation control process executed by the control portion 8 in the image forming apparatus 100A and the operation control method according to the present disclosure will be described with reference to FIG. 3. Here, steps S11, S12, ... represent numbers of processing procedures (steps) executed by the control portion 8. The first operation control process is executed when the image forming apparatus 100A is started.

### <Step S11>

First, in step S11, the control portion 8 determines whether or not the administrator password is the initial password. The process of step S11 is an example of a determination step according to the present disclosure, and is executed by the determination processing portion 31 of the control portion 8.

More specifically, the control portion 8 determines that the administrator password is the initial password when the character string stored in the first storage area matches the character string stored in the second storage area.

Here, when the control portion 8 determines that the administrator password is the initial password (Yes in S11), the control portion 8 moves the process to step S12. In addition, when the administrator password is not the initial password (No in S11), the control portion 8 moves the process to step S19.

### <Step S12>

In step S12, the control portion 8 starts the image forming apparatus 100A in the restricted mode. The process of step S12 is an example of a startup step according to the present disclosure, and is executed by the startup processing portion 32 of the control portion 8.

### <Step S13>

In step S13, the control portion 8 causes the operation display portion 5A to display the reception screen. The process of step S13 is an example of a reception step according to the present disclosure, and is executed by the reception processing portion 33A of the control portion 8.

### <Step S14>

In step S14, the control portion 8 determines whether or not the change operation has been received on the reception screen.

More specifically, when the change key included on the reception screen is operated, the control portion 8 determines that the change operation has been received.

Here, when the control portion 8 determines that the change operation has been received (Yes in S14), the control portion 8 executes the change process and moves the process to step S19. The process of moving the process to step S19 after the change process is executed by the transition processing portion 35 of the control portion 8. In addition, in a case where the change operation has not been received (No in S14), the control portion 8 moves the process to step S15.

### <Step S15>

In step S15, the control portion 8 determines whether or not the temporary transition operation has been received on the reception screen.

More specifically, the control portion 8 determines that the temporary transition operation has been received when the skip button included on the reception screen is operated.

Here, when the control portion 8 determines that the temporary transition operation has been received (Yes in S15), the control portion 8 moves the process to step S16. In addition, when the temporary transition operation has not been received (No in S15), the control portion 8 moves the process to step S14.

### <Step S16>

In step S16, the control portion 8 switches the operating mode of the image forming apparatus 100A to the normal mode.

### <Step S17>

In step S17, the control portion 8 determines whether or not the end condition is satisfied.

More specifically, the control portion 8 determines that the end condition is satisfied when any function of the image forming apparatus 100A has been used.

Here, when the control portion 8 determines that the end condition is satisfied (Yes in S17), the control portion 8 moves the process to step S18. In addition, when the end condition is not satisfied (No in S17), the control portion 8 waits for the end condition to be satisfied in step S17.

### <Step S18>

In step S18, the control portion 8 switches the operating mode of the image forming apparatus 100A to the restricted mode. The processes of steps S15 to S18 are executed by the temporary transition processing portion 34 of the control portion 8.

### <Step S19>

In step S19, the control portion 8 starts the image forming apparatus 100A in the normal mode. The process of step S19 is executed by the startup processing portion 32 of the control portion 8.

In this manner, in the image forming apparatus 100A, in a case in which the administrator password is the initial password at the time of startup, the image forming apparatus 100A is started in the restricted mode and the change operation is received. Thus, use of the functions of the image forming apparatus 100A is restricted until the administrator password is changed from the initial password. Therefore, it is possible to prevent the image forming apparatus 100A from being continuously used in a state where the administrator password is the initial password.

In addition, in the image forming apparatus 100A, in a case in which the temporary transition operation is received while the image forming apparatus 100A is started in the restricted mode, the operation mode is temporarily switched from the restricted mode to the normal mode. Thus, it is possible to allow a service person who installs the image forming apparatus 100A to check the operation of the image forming apparatus 100A before the user changes the administrator password.

### [Second Embodiment]

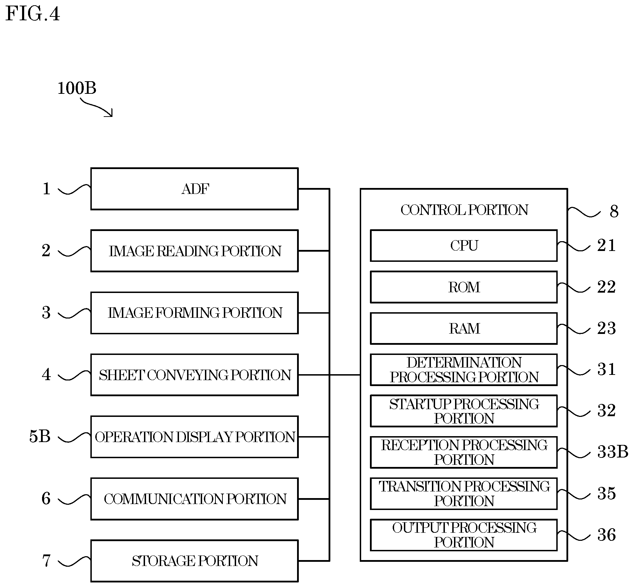

Hereinafter, configuration of an image forming apparatus 100B of a second embodiment according to the present disclosure will be described with reference to FIG. 4.

As shown in FIGS. 2 and 4, the image forming apparatus 100B differs from the image forming apparatus 100A in being equipped with an operation display portion 5B, a reception processing portion 33B, and an output processing portion 36 instead of the operation display portion 5A, the reception processing portion 33A, and the temporary transition processing portion 34. Note that the other points are common to the image forming apparatus 100A and the image forming apparatus 100B. Hereinafter, only the configuration of the image forming apparatus 100B that is different from the image forming apparatus 100A will be described.

The operation display portion 5B includes a second display portion and a second operation portion. The second display portion is capable of displaying a multi-digit number. The second display portion is used to display a number of copies to be printed, or the like, specified by the user. The second display portion cannot display the reception screen. The second operation portion includes operation keys (hard keys) used for specifying the number of copies to be printed, inputting an instruction to execute the printing function, and the like.

When the image forming apparatus 100B is started in the restricted mode, the reception processing portion 33B receives the change operation via an operation input device communicably connected to the image forming apparatus 100B. For example, the operation input device is a personal computer. Note that the operation input device may be a notebook computer, a smartphone, a tablet terminal, or the like.

For example, in a case in which the image forming apparatus 100B is connected to a communication network, and the reception processing portion 33B receives a request to display a webpage from the operation input device connected to the communication network, the reception processing portion 33B displays the webpage including the reception screen on the display portion of the operation input device. For example, the communication network is a LAN (Local Area Network) or the Internet.

When the image forming apparatus 100B is started in the restricted mode and is connected to the communication network, the output processing portion 36 outputs identification information of the image forming apparatus 100B in the communication network in response to a predetermined output operation. For example, the identification information includes an IP address and a subnet address of the image forming apparatus 100B. In addition, the output operation is an operation of a predetermined operation key included in the second operation portion of the operation display portion 5B.

More specifically, when the output operation is received, the output processing portion 36 causes the image forming portion 3 to print the identification information on a sheet. The output processing portion 36 may also print a serial number of the image forming apparatus 100B on the sheet together with the identification information.

### [Second Operation Control Process]

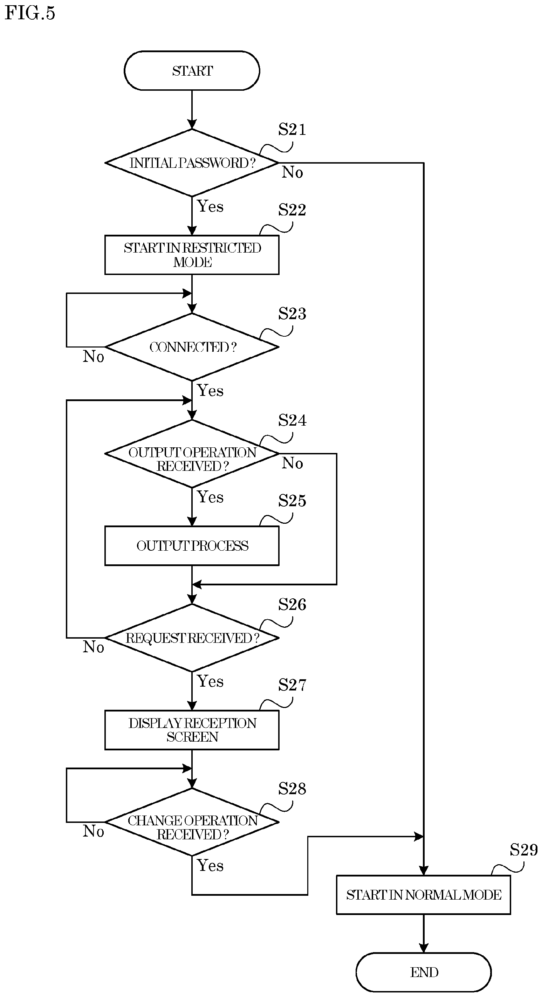

Hereinafter, an example of a procedure of a second operation control process executed by the control portion 8 in the image forming apparatus 100B will be described with reference to FIG. 5. Note that the second operation control process is executed when the image forming apparatus 100B is started.

### <Step S21>

First, in step S21, the control portion 8 determines whether or not the administrator password is the initial password. The process of step S21 is executed by the determination processing portion 31 of the control portion 8.

Here, when the control portion 8 determines that the administrator password is the initial password (Yes in S21), the control portion 8 moves the process to step S22. In addition, when the administrator password is not the initial password (No in S21), the control portion 8 moves the process to step S29.

### <Step S22>

In step S22, the control portion 8 starts the image forming apparatus 100B in the restricted mode. The process of step S22 is executed by the startup processing portion 32 of the control portion 8.

### <Step S23>

In step S23, the control portion 8 determines whether or not the image forming apparatus 100B is connected to the communication network.

More specifically, the control portion 8 determines that the image forming apparatus 100B is connected to the communication network when an IP address is assigned by a router of the communication network.

Here, when the control portion 8 determines that the image forming apparatus 100B is connected to the communication network (Yes in S23), the control portion 8 moves the process to step S24. In addition, when the image forming apparatus 100B is not connected to the communication network (No in S23), the control portion 8 waits for the image forming apparatus 100B to be connected to the communication network in step S23.

### <Step S24>

In step S24, the control portion 8 determines whether or not the output operation has been received.

More specifically, the control portion 8 determines that the output operation has been received when an operation of a predetermined operation key included in the second operation portion of the operation display portion 5B has been received.

Here, when the control portion 8 determines that the output operation has been received (Yes in S24), the control portion 8 moves the process to step S25. In addition, in a case where the output operation has not been received (No in S24), the control portion 8 moves the process to step S26.

<Step S25>

In step S25, the control portion 8 executes an output process for outputting the identification information. The process of step S25 is executed by the output processing portion 36 of the control portion 8.

More specifically, the control portion 8 causes the image forming portion 3 to print the identification information on a sheet.

Thus, it is possible for a user to use the identification information printed on the sheet to access the image forming apparatus 100B from the operation input device connected to the communication network.

### <Step S26>

In step S26, the control portion 8 determines whether or not a request to display the webpage has been received from the operation input device connected to the communication network.

Here, when the control portion 8 determines that the request to display the webpage has been received (Yes in S26), the control portion 8 moves the process to step S27. In addition, in a case in which the request to display the webpage has not been received (No in S26), the control portion 8 causes the process to move to step S24.

### <Step S27>

In step S27, the control portion 8 causes the display portion of the operation input device to display the webpage including the reception screen. The process of step S27 is executed by the reception processing portion 33B of the control portion 8.

### <Step S28>

In step S28, the control portion 8 determines whether or not the change operation has been received on the reception screen.

Here, when the control portion 8 determines that the change operation has been received (Yes in S28), the control portion 8 executes the change process and moves the process to step S29. The process of moving the process to step S29 after the change process is executed by the transition processing portion 35 of the control portion 8. In addition, when the change operation has not been received (No in S28), the control portion 8 waits for the change operation to be received in step S28.

### <Step S29>

In step S29, the control portion 8 starts the image forming apparatus 100B in the normal mode. The process of step S29 is executed by the startup processing portion 32 of the control portion 8.

In this manner, in the image forming apparatus 100B, similarly to the image forming apparatus 100A, it is possible to prevent the image forming apparatus 100A from being continuously used in a state in which the administrator password is the initial password.

Note that the image forming apparatus 100B may include an operation display portion 5A instead of the operation display portion 5B. That is, the image forming apparatus 100B may be capable of displaying the reception screen. In this case, the control portion 8 may include both the reception processing portion 33A and the reception processing portion 33B. In addition, the output process may be a process of displaying the identification information on the operation display portion 5A.

In addition, the image forming apparatus 100B may be communicably connected to the operation input device via a USB cable. In this case, when the image forming apparatus 100B is communicably connected to the operation input device via the USB cable, the reception processing portion 33B may display the reception screen on the display portion of the operation input device.

In addition, the image forming apparatus 100B may perform wireless communication with the operation input device in accordance with a predetermined wireless communication standard. For example, the wireless communication standard is Bluetooth. In this case, the reception processing portion 33B only needs to display the reception screen on the display portion of the operation input device when the image forming apparatus 100B is capable of performing wireless communication between the image forming apparatus 100B and the operation input device in accordance with the wireless communication standard.

In addition, the communication network may be a wireless LAN. In this case, when the image forming apparatus 100B is started in the restricted mode and a predetermined display operation is received, the control portion 8 causes a setting screen used for wireless LAN connection settings to be displayed on the operation display portion 5A or on the operation input device capable of performing wireless communication in accordance with the wireless communication standard. The display operation may be an operation of an operation key (soft key) included on the reception screen, or an operation of an operation key (hard key) included in the first operation portions or the second operation portion. The setting screen receives an operation for inputting a Service Set Identifier (SSID) and an operation for inputting a password. When an operation to input an SSID and a password on the setting screen is received, the control portion 8 may connect the image forming apparatus 100B to the wireless LAN based on the input information.

In addition, the control portion 8 does not necessarily have to include the transition processing portion 35. In this case, the control portion 8 may restart the image forming apparatus 100B (or the image forming apparatus 100A) when the administrator password is changed from the initial password by the change operation.

### [Supplementary Notes of the Invention]

An outline of the invention extracted from the above-described embodiment will be added below. Note that the configurations and processing functions described in the following supplementary notes can be selected and combined as desired.

### <Supplementary Note 1>

An electronic device, including:
a determination processing portion configured to determine whether an administrator password used for authenticating an administrator of the electronic device is a predetermined initial password when the electronic device is started;
a startup processing portion configured to start the electronic device in a restricted mode in which functions of the electronic device are restricted when the determination processing portion determines that the administrator password is the initial password; and
a reception processing portion configured to receive a change operation to change the administrator password when started in the restricted mode.

### <Supplementary Note 2>

The electronic device according to Supplementary Note 1, wherein
the reception processing portion receives the change operation at an operation input device communicatively connected to the electronic device.

### <Supplementary Note 3>

The electronic device according to Supplementary Note 2, including
an output processing portion configured to output identification information of the electronic device in the communication network in response to a predetermined output operation when the electronic device is started in the restricted mode and the electronic device is connected to the communication network.

### <Supplementary Note 4>

The electronic device according to any one of Supplementary Notes 1 to 3, including
a temporary transition processing portion configured to, when the electronic device is started in the restricted mode and a predetermined temporary transition operation is received, switch an operating mode of the electronic device from the restricted mode to a normal mode in which functions of the electronic device are not restricted until a predetermined end condition is satisfied.

### <Supplementary Note 5>

The electronic device according to any one of Supplementary Notes 1 to 4, including
a transition processing portion configured to, when the administrator password is changed from the initial password by the change operation, switch the operating mode of the electronic device from the restricted mode to a normal mode in which functions of the electronic device are not restricted.

### <Supplementary Note 6>

The electronic device according to any one of Supplementary Notes 1 to 5, including
one or both of an image reading portion configured to read an image of a document and an image forming portion configured to form an image based on image data.

### <Supplementary Note 7>

An operation control method executed by an electronic device,
the operation control method including:
a determination step of determining whether an administrator password used for authenticating an administrator of the electronic device is a predetermined initial password when the electronic device is started;
a startup step of starting the electronic device in a restricted mode in which functions of the electronic device are restricted when the determination step determines that the administrator password is the initial password; and
a reception step of receiving a change operation to change the administrator password when started in the restricted mode.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An electronic device (100A, 100B), comprising:
a determination processing portion (31) configured to determine whether an administrator password used for authenticating an administrator of the electronic device (100A, 100B) is a predetermined initial password when the electronic device (100A, 100B) is started;
a startup processing portion (32) configured to start the electronic device (100A, 100B) in a restricted mode in which functions of the electronic device (100A, 100B) are restricted when the determination processing portion (31) determines that the administrator password is the initial password; and
a reception processing portion (33A, 33B) configured to receive a change operation to change the administrator password when started in the restricted mode.

2. The electronic device (100B) according to claim 1, wherein
the reception processing portion (33B) receives the change operation at an operation input device communicatively connected to the electronic device (100B).

3. The electronic device (100B) according to claim 2, comprising
an output processing portion (36) configured to output identification information of the electronic device (100B) in the communication network in response to a predetermined output operation when the electronic device (100B) is started in the restricted mode and the electronic device (100B) is connected to the communication network.

4. The electronic device (100A) according to any one of claim 1 to 3, comprising
a temporary transition processing portion (34) configured to, when the electronic device (100A) is started in the restricted mode and a predetermined temporary transition operation is received, switch an operating mode of the electronic device (100A) from the restricted mode to a normal mode in which functions of the electronic device (100A) are not restricted until a predetermined end condition is satisfied.

5. The electronic device (100A, 100B) according to any one of claim 1 to 4, comprising
a transition processing portion (35) configured to, when the administrator password is changed from the initial password by the change operation, switch the operating mode of the electronic device (100A, 100B) from the restricted mode to a normal mode in which functions of the electronic device (100A, 100B) are not restricted.

6. The electronic device (100A, 100B) according to any one of claim 1 to 5, comprising
one or both of an image reading portion (2) configured to read an image of a document and an image forming portion (3) configured to form an image based on image data.

7. An operation control method executed by an electronic device (100A, 100B),
the operation control method comprising:
a determination step of determining whether an administrator password used for authenticating an administrator of the electronic device (100A, 100B) is a predetermined initial password when the electronic device (100A, 100B) is started;
a startup step of starting the electronic device (100A, 100B) in a restricted mode in which functions of the electronic device (100A, 100B) are restricted when the determination step determines that the administrator password is the initial password; and
a reception step of receiving a change operation to change the administrator password when started in the restricted mode.
